# EUROPEAN PATENT APPLICATION

(11) **EP 2 921 642 A1**
(43) Date of publication of application: **23.09.2015**
(21) Application number: 14160725.9
(22) Date of filing: 19.03.2014
(51) Int. Cl.: E21B 41/00, E21B 33/038, H02B 7/01

(54) **Power switching device**

(71) Applicant: Siemens Aktiengesellschaft, 80333 München (DE)
(72) Inventor: Kristensen, Knut Schonhowd, 7012 Trondheim (NO)

(57) **Abstract**

A power switching device for operation in an underwater environment is provided. The power switching device has a base unit with a pressure compensated enclosure. The enclosure forms a single base chamber filled with a liquid or gel. A power input and at least a first power output are mounted to the base unit. A pressure resistant wall is mounted to the base unit and separates a base chamber from a switching chamber. Penetrators are arranged in the pressure resistant wall. Input busbars and output busbars are directly connected to the penetrators in the base chamber.

## Description

### FIELD OF THE INVENTION

The present invention relates to a power switching device for under water operation, in particular for operation in a deep sea environment, and to a method of assembling a power switching device.

### BACKGROUND

Due to the increasing energy demand, offshore oil and gas production is moving into deeper waters. Wells for hydrocarbon production can be located in water depth down to 3.000 meters or more and a considerable distance from shore. For ensuring an efficient and secure production, processing facilities are being installed at the ocean floor in proximity to such well. Installations on the ocean floor can comprise a range of components, including pumps, compresses and the like as well as a power grid for providing such components with electric power. The power grid installed at the ocean floor may for example comprise a transformer, switching equipment, drives including variable frequency converters and the like. These components are exposed to pressures of up to or even in excess of 300 bars (at a depth of 3.000 meters). To protect such components from the corrosive environment of the surrounding seawater and to deal with the high pressures, pressure resistant enclosures or pressure compensated enclosures can be used.

A device for switching power in a power grid located at the ocean floor may for example employ several compartments to prevent electric equipment from coming into contact with seawater. As an example, the document EP 2 052 447 A1 describes a switching device which has several modules forming several separate chambers sealed from each other to protect electric equipment from seawater, for example by having the equipment disposed in separate chambers or by forming a double barrier by means of separate chambers. Improving safety by such compartmentalized approach is accompanied by an increase in size and weight, as well as an increase in complexity, due to different chambers, enclosures, modules and the like.

It is desirable to improve the safety and reliability of a switching device operated at the ocean floor. It is also desirable to provide an improved functionality and electrical operation. Furthermore, it is beneficial if such switching device is relatively compact and light-weight, in order to reduce costs of transportation and installation as well as costs of the device itself.

### SUMMARY

Accordingly, there is a need for an improved switching device operable in an underwater environment, and to mitigate at least some of the drawbacks mentioned above.

This need is met by the features of the independent claims. The dependent claims describe embodiments of the invention.

An embodiment of the present invention provides a power switching device for operation in an underwater environment, in particular in a deepsea environment, which may be adapted to be operated at the ocean floor. The power switching device comprises a base unit having a pressure compensated enclosure, wherein the pressure compensated enclosure forms a single base chamber filled with a liquid or gel, for example a dielectric liquid. It further comprises a switching assembly having a pressure resistant enclosure which forms a switching chamber and comprises at least a first switch, in particular a high voltage circuit breaker (CB), disposed in the switching chamber. A power input and at least a first power output are mounted to the base unit, in particular to the pressure compensated enclosure thereof. Plural power distribution busbars are arranged in the base chamber of the base unit. The plural power distribution busbars comprise at least a set of input busbars which form part of an input electrical connection that leads from the power input to the first switch. They further comprise at least a first set of output busbars which form part of a first output electrical connection that leads from the first switch to the first power output. A pressure resistant wall is mounted to the base unit and separates the base chamber from the switching chamber. Penetrators are arranged in the pressure resistant wall. The penetrators are configured to lead the input electrical connection and the output electrical connection through the pressure resistant wall. The input busbars and/or the output busbars are directly connected to the penetrators in the base chamber.

By providing only a single base chamber between the power input and the penetrators leading into the switching chamber, the complexity of the power switching device and its weight and size may be reduced. Furthermore, the inventors of the present invention have discovered that in contrast to the general belief, providing a single chamber in which the power distribution equipment is disposed in fact improves the reliability of the power switching device and the protection against water ingress compared to an approach which uses plural separate chambers that are sealed from each other. In particular, plural separate chambers require a number of additional components, such as additional electrical connections, boot seals, inspection hatches, pressure compensators and the like. Each additional component is associated with an additional risk of failure. The reduced complexity provided by the single base chamber of the present embodiment thus in fact improves reliability, even though only a single barrier against the surrounding seawater is provided compared to a plural chamber approach having two barriers. Furthermore, the configuration of the present embodiment allows the input and output busbars to be directly connected to the penetrators which lead the electrical connections into the switching chamber, thus improving the electrical performance of the power switching device. Losses, arcing and potential failure of electrical connections may thus be reduced.

In an embodiment, the input busbars and/or the output busbars may for example be connected by means of bolts to a conductive core of the respective penetrator, and the respective busbar may for this purpose comprise a bent portion or a flexible busbar section.

The first switch may be arranged and configured such that it is capable of connecting and disconnecting the power input from the power output. Thereby, a switching mechanism or protection mechanism may be provided. As an example, the first switch may be controlled so as to open upon occurrence of an overvoltage or overcurrent, or it may be controlled so as to turn on and off the power supply to a load, such as a compressor or pump installed at the ocean floor.

The pressure resistant wall comprising the penetrators may be termed penetrator plate. In an embodiment, the pressure resistant wall is fixedly mounted to the pressure compensated enclosure of the base unit and closes an opening in the pressure compensated enclosure thereof. It may for example be mounted by means of bolts or it may be welded.

The pressure resistant enclosure of the switching chamber may have an opening and it may be mounted to the pressure resistant wall such that the pressure resistant wall closes the opening in the pressure resistant enclosure. Accordingly, there may be only a single wall between the base chamber and the switching chamber, thus requiring fewer penetrations and reducing the complexity of the power switching device.

The pressure resistant wall may be a circular metal plate.

In an embodiment, the power switching device further comprises at least a first and a second seal between the pressure resistant wall and the pressure compensated enclosure of the base unit. The at least two seals may comprise at least one, preferably two elastomeric seals. In another embodiment, the at least two seals may comprise at least one, or even at least two metal seals. In other configurations, both metal and elastomeric seals can be provided. An example configuration may have one or two metallic seals and one or two elastomeric seals. Additionally or alternatively, a weld may be provided between the pressure resistant wall and the pressure compensated enclosure of the base unit. In an example configuration, one or more elastomeric seals may be provided, and the pressure resistant wall may in addition be welded to the pressure resistant enclosure of the base unit. In such configurations, an effective sealing against the ingress of seawater into the single base chamber and thus an effective protection of the electric components disposed in the base chamber can be achieved. The seals may for example be implemented as flange seals, they may be ring shaped seals sealing between a flange of the pressure compensated enclosure and the pressure resistant wall.

In an embodiment, the power input comprises electrical conductors leading into the base chamber, and the input busbars may be directly connected to the electrical conductors. The power input may for example be provided in form of a connector or a penetrator passing a conductor into the base chamber. The input busbars may be mounted directly to such conductor, e.g. by making use of a band or flexible busbar section which is fixed to the conductor by a fastening element, such as a screw.

In particular, the input busbars and/or the output busbars may run continuously between the power input or the power output, respectively, and the penetrators of the penetrator plate. In such configuration, an efficient and low-loss transport of electric power through the power switching device may be achieved. The configuration may be similar for further switches and power outputs of the power switching device.

In an embodiment, the power input may be a three-phase power input and the power output may be a three-phase power output. In such configuration, each set of busbars may comprise at least three busbars.

In an embodiment, the switching assembly comprises at least two switches, and the power switching device further comprises a second power output mounted to the base unit. The plural power distribution busbars arranged in the base chamber may comprise a second set of output busbars which form part of a second output electrical connection with leads from the second switch to the second power output. The power input connection may then also connect to the second switch to provide power thereto. Plural consumers may thus be switched using such power switching device.

The pressure resistant enclosure of the switching assembly may be a cylindrical enclosure which is closed at one end and open at the other end. At the open end, the pressure resistant enclosure may be fixedly mounted to the pressure resistant wall, e.g. by means of bolts or welding. Furthermore, at least two seals may be provided between the pressure resistant enclosure and the pressure resistant wall. In particular, at least one or two metal seals and/or at least one or two elastomeric seals may be provided, e.g. one elastomeric seal and two metal seals.

In an embodiment, the power switching device may further comprise a (first) support frame arranged inside the base chamber and mounted to the pressure resistant wall. The input busbars and/or the output busbars may comprise busbar sections supported by the first support frame. By providing such support frame fixed to the pressure resistant wall, the assembly of the power switching device may be facilitated, since the support frame together with the busbar sections may be slid into a cylindrical section of the pressure compensated enclosure of the base unit. The support frame may be welded or bolted to the pressure resistant wall. The first support frame may comprise sliding elements, such as gliders, which may be made of a plastic material, for supporting the frame against an inner wall of the cylindrical section of the pressure compensated enclosure of the base unit, so that assembly is facilitated.

In an embodiment, the power switching device may comprise a (second) support frame arranged inside the switching chamber and mounted to the pressure resistant wall. At least the first switch may be supported by this (second) support frame. Thus, assembling the switching assembly may be facilitated. The second support frame may furthermore support one or more additional switches and may furthermore support electrical connections inside the switching chamber, such as cables or the like. The second support frame may be adapted to be slid into a cylindrical section of the pressure resistant housing of the switching assembly. The second support frame may be fixed to the pressure resistant wall by welding, by bolting or the like.

Although such configuration may not allow a disassembly of the power switching device into separate modules, since the electric components are fixed to the pressure resistant wall, it may have benefits with respect to the assembly.

In an embodiment, the pressure compensated enclosure of the base unit comprises a first cylindrical section having an opening at a first end, the pressure resistant wall being mounted to the first end to close the opening. It further has a second cylindrical section, wherein the first and the second cylindrical sections meet in a cross junction or a T-junction to form the base chamber. A relatively compact design of the pressure compensated enclosure and thus of the base unit and the power switching device may thereby be achieved. The single base chamber may be the whole interior space inside the pressure compensated enclosure of the base unit which is formed by the first and second cylindrical sections. The busbars may be directly arranged inside this interior space of the pressure compensated enclosure. In particular, they are not surrounded by further chambers or walls, the pressure compensated enclosure providing a single barrier between the busbars and the surrounding ambient medium, in particular seawater.

The pressure compensated enclosure may comprise further cylindrical sections, e.g. mounted perpendicular to the second cylindrical section, e.g. for providing mounting space for power inputs or power outputs, e.g. on a closing plate closing the end of such additional cylindrical section. In an embodiment, the plural power distribution busbars may comprise busbar sections extending along the axial direction of the first cylindrical section and busbar sections extending along the axial direction of the second cylindrical section. These busbar sections may be interconnected at the cross junction or the T-junction of the first and second cylindrical sections of the pressure compensated enclosure. In such configuration, a continuous busbar connection from the power input or power output to the penetrators of the pressure resistant wall may be achieved.

In an embodiment, the first and second cylindrical sections meet in a cross junction and the first cylindrical section may have a further opening at a second end adjacent to the cross junction, the second opening being closed by a closing plate or by a pressure compensator. By means of such opening in proximity to the cross junction, easy access to the different busbar sections in the power switching device becomes possible, and assembly thereof may be facilitated. In particular, the connection of the busbar sections in the first cylindrical section and the busbar sections in the second cylindrical sections can be performed in efficient way.

In an embodiment, the second cylindrical section may have a first opening closed by a closing plate on which the power input is provided, and a second opening at a second end, wherein the second end is adapted to be mounted to a corresponding second end of a pressure compensated enclosure of a second base unit. The input busbars may be configured to extend through the second opening into the pressure compensated enclosure of the second base unit. In such configuration, an extension of the power switching device by further base units having respective switching assemblies becomes possible. As an example, the power switching device may comprise one, two, three, or more additional base units having respective switching assemblies.

In an embodiment, the pressure compensated enclosure of the base unit comprises an enclosure section (in particular the above mentioned second cylindrical section) extending along a longitudinal direction. The switching assembly may extend perpendicular to this longitudinal direction, and the input busbars may comprise a first busbar section extending parallel to the longitudinal direction within the enclosure section and a second busbar section extending perpendicular to the longitudinal direction towards the switching assembly.

In an embodiment, the power input may be mounted to a first end of the second cylindrical section of the pressure compensated enclosure of the base unit, and the power output may be mounted to the cylindrical wall of the second cylindrical section, for example by means of the above mentioned additional cylindrical section.

Accordingly, one, two or more power outputs may extend perpendicular to the longitudinal direction of the second cylindrical section. Furthermore, the output busbars may comprise a busbar section that extends perpendicular to the longitudinal direction towards the power outputs.

In an embodiment, the power switching device further comprises a pressure compensator that is in fluid communication with the base chamber of the base unit and that is configured to balance a pressure inside the base chamber to an ambient pressure prevailing outside the power switching device when the power switching device is installed under water, for example at the ocean floor. Such pressure compensator may for example be a single wall bellows type pressure compensator formed of formed metal bellows, as described in EP 2 610 881 A1, which is hereby incorporated by reference in its entirety. In other embodiments, different types of pressure compensators, such as double-walled compensators may be used.

In an embodiment, the switching assembly, in particular the pressure resistant enclosure, may be configured to maintain a predefined internal pressure in the switching chamber when the power switching device is deployed under water, e.g. on the ocean floor. The predefined internal pressure may be a pressure in a range between about 1 and about 10 bar, for example a pressure below 10 bar, below 5 bar or below 2 bar. The predefined internal pressure may be about atmospheric pressure, e.g. it may be a pressure close to atmospheric pressure, it may for example be a pressure of about 1.5 bar.

The switching chamber may be filled with a gas or a liquid. In an embodiment, the switching chamber may be filled with SF₆. The first switch and the further switches may for example be vacuum circuit breakers.

A further embodiment of the invention provides a method of assembling a power switching device for operation in an underwater environment, in particular a deepsea environment. The method comprises the steps of providing a base unit comprising a pressure compensated enclosure, a power input mounted to the base unit, and at least a first power output mounted to the base unit; providing a pressure resistant wall comprising penetrators arranged in the pressure resistant wall; directly connecting sections of input busbars which form part of an input electrical connection and/or sections of output busbars which form part of a first output electrical connection to the penetrators of the pressure resistant wall; mounting the pressure compensated enclosure of the base unit to the pressure resistant wall to form a single base chamber in which the input busbars and the output busbars are arranged; mounting a pressure resistant enclosure to the pressure resistant wall so as to form a switching chamber, wherein at least a first switch is disposed in the switching chamber; configuring the input electrical connection such that it leads from the power input to the first switch via the input busbars and the penetrators; and configuring the output electrical connection such that it leads from the first switch to the first power output via the penetrators and the output busbars.

By such method, advantages similar to the ones outlined further above with respect to the power switching device may be achieved. It should be noted that the above description of steps is not meant to indicate a particular order of the steps; rather, the steps may be performed in a different order. As an example, the pressure compensated enclosure may be mounted after mounting the pressure resistant enclosure, or they may be mounted simultaneaously.

In a further embodiment, the method may comprise: providing a pressure resistant wall comprising at least a first frame; arranging sections of input busbars which form part of an input electrical connection and sections of output busbars which form part of a first output electrical connection on the first frame; and mounting the pressure compensated enclosure of the base unit to the pressure resistant wall to form a single base chamber in which the first frame and the input busbars and output busbars are arranged.

By making use of the frame and the busbars in the above outlined configuration, the assembly of the power switching device is facilitated.

In an embodiment, the pressure resistant wall may further comprise a second frame, and the method may further comprise the step of arranging at least the first switch, in particular a high voltage circuit breaker, on the second frame. Accordingly, assembly of the power switching device may be further facilitated.

In embodiments of the method, the method may be performed so as to assemble a power switching device in any of the above outlined configurations. In particular, the method may comprise steps as described above with respect to embodiments and configurations of the power switching device.

It is to be understood that the features mentioned above and those said to be explained below can be used not only in the respective combinations indicated, but also in other combinations or in isolation, without leaving the scope of the present invention.

Further embodiments of the invention are conceivable. As an example, in some embodiments, the input busbars and the output busbars may not be connected directly to the penetrators of the pressure resistant wall. They may for example be connected indirectly, e.g. via an intervening electrical connection. The claims of one or more divisional applications may be aimed such embodiment or at further aspects, for example at the enclosure of the switching device, the supporting frame of the busbar sections or other aspects disclosed herein.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Figure 1 is a schematic drawing showing a sectional view of a power switching device according to an embodiment of the invention.
Figure 2 is a schematic drawing showing a perspective view of the power switching device of figure 1 in a particular implementation according to an embodiment.
Figure 3 is a schematic drawing showing the mounting of components of a power switching device according to an embodiment.
Figure 4 is a schematic drawing showing a perspective view of the mounting of busbar sections according to an embodiment.
Figure 5 is a schematic drawing showing a perspective view of busbar sections which may be employed in an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense.

It should be noted that the drawings are to be regarded as being schematic representations only, and elements in the drawings are not necessarily to scale with each other. Rather, the representation of the various elements is chosen such that their function and general purpose become apparent to a person skilled in the art.

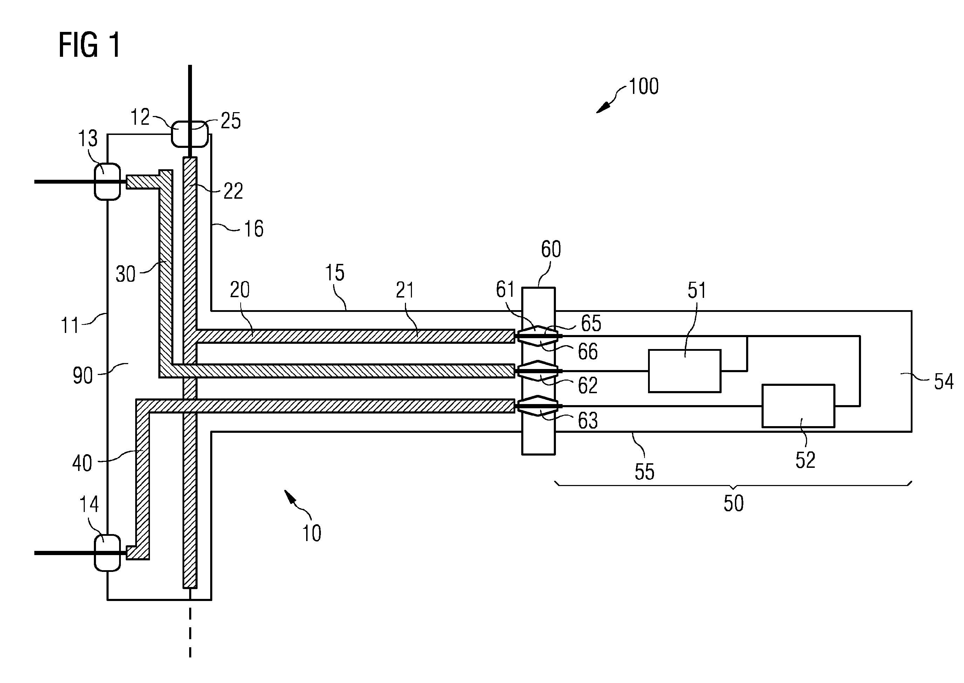

Figure 1 is a schematic drawing showing a power switching assembly 100 having a base unit 10 and a switching assembly 50. The base unit 10 has a pressure compensated enclosure 11, meaning that the pressure inside the enclosure 11 is balanced to the pressure prevailing outside the enclosure 11, for example in the surrounding seawater when the power switching assembly 100 is installed at the ocean floor. A power input 12 and first and second power outputs 13, 14 are mounted to the pressure compensated enclosure 11 of base unit 10.

Power input 12 and power outputs 13, 14 may for example be provided in the form of penetrators which are mounted in a penetrator feed-through provided in the wall of the pressure compensated enclosure 11. A conductor 25 can thus for example be led from outside the enclosure 11 into the single base chamber 90 of the base unit 10. Outside the enclosure 11, an underwater cable may terminate at the power input 12. In other configurations, a part of a connector may be provided as the power input 12 or the power outputs 13, 14, the connector part then leading a conductor 25 into the chamber 90 of base unit 10. Further configurations are conceivable.

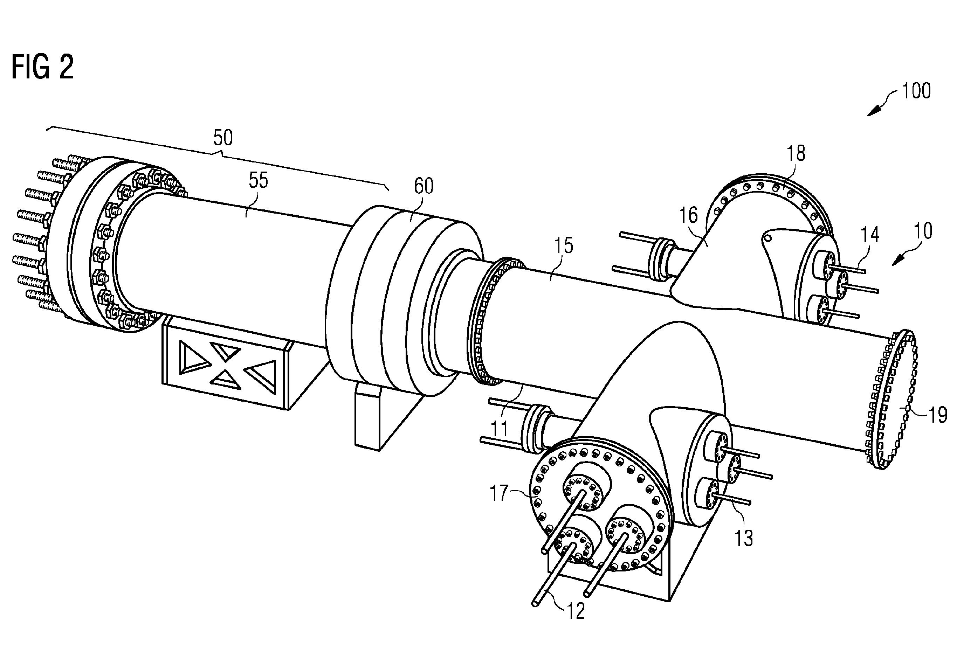

Base chamber 90 is formed by a first cylindrical section 15 and a second cylindrical section 16 of the pressure compensated enclosure 11. In the example of figure 1, the first and second cylindrical sections 15, 16 meet in a T-junction. In other configurations, such as illustrated in figure 2, they may meet in a cross-junction. The opening in the end of the first cylindrical section 15 is closed by the pressure resistant wall 60. The switching assembly 50 includes a pressure resistant enclosure 55 which is mounted to the other side of the pressure resistant wall 60. Pressure resistant enclosure means that the pressure inside the enclosure 55 is not balanced to the pressure in the medium surrounding the power switching device 100. Rather, a predefined internal pressure is maintained inside the pressure resistant enclosure 55. Accordingly, when deployed on the ocean floor, a relatively high pressure difference may exist between the base chamber 90 and the switching chamber 54. Pressure resistant wall 60 is configured to be capable of withstanding such pressure differences. Pressure resistant wall 60 may be configured as a circular plate having a thickness that is sufficient to withstand the respective pressure difference. To lead electrical connections into and out of the switching chamber 54, penetrators 61, 62 and 63 are provided in the pressure resistant wall 60, which may thus also be termed penetrator plate. The penetrators 61, 62, 63 may for example comprise a conductor 65 disposed in a body of insulating material 66. The penetrator disclosed in the document WO 2012/038102 A1, which is hereby incorporated by reference in its entirety, may for example be used.

The switching assembly 50 comprises a first switch 51 and a second switch 52. In other embodiments, only a single switch or more than two switches may be provided. The switches may for example be high voltage (HV) circuit breakers, in particular vacuum circuit breakers. They may be used for protective measures, e.g. cutting off the power in case of a short circuit, or may be used for switching on and off equipment coupled to the power outputs 13, 14.

An input electrical connection is provided from the power input 12 to the first and second switches 51, 52. A set of input busbars 20 is used inside the base chamber 90 to provide the input electrical connection. The power switching device 100 can be configured as a three-phase system, and accordingly, the set of input busbars 20 may comprise three busbars, one for each phase. Each busbar may have a section 21 which runs along the axial direction of the first cylindrical section 15 of the enclosure 11 and a second section 22 which runs along the axial direction of the second cylindrical section 16 of enclosure 11.

A first output electrical connection from the first switch 51 to the first power output 13 is inside the base chamber 90 provided by a first set of output busbars 30. A second output electrical connection from the second switch 52 to the second power output 14 is provided inside base chamber 90 by a second set of output busbars 40. It should be clear that each set of output busbars may again comprise three busbars, one for each phase of electric power. Similar to the input busbars, the output busbars each comprise a section running parallel to the axial direction of the first cylindrical section 15 and a section running parallel to the axial direction of the second cylindrical section 16 of the enclosure 11.

Each of the penetrators 61, 62 and 63 may accordingly comprise three penetrators, one for each phase. In the example of figure 1, the busbars 20, 30 and 40 are in the base chamber 90 directly connected to the penetrators 61, 62 and 63. The conductor 65 of each penetrator may in the base chamber 90 be provided with a mounting portion, for example a threaded recess in the end of the respective conductor 65. Busbars 20, 30 and 40 may be directly mounted to this mounting portion, e.g. by bolting the respective busbar to the conductor 65 of the respective penetrator.

The ends of the busbars 20, 30, 40 may for this purpose be provided with bent portions or flexible busbar sections in order to achieve a suitable arrangement of the penetrators 61, 62, 63 in the penetrator plate 60. Flexible busbar sections may be provided in form of thin strips of plates, e.g. copper plates, which are stacked together in order to form the busbar section, thus making the busbar section flexible. These may be bolted to the conductor 65 of the penetrator by means of a bolt.

On their other ends, the busbars 20, 30, 40 may be directly connected to the conductor 25 of the power input 12 or of the power outputs 13, 14, respectively. Again, the conductors 25 can be provided with a threaded hole towards which the end of the busbar is bolted. Flexible or bent busbar sections may be employed to achieve a desired arrangement of the power input 12 and the power outputs 13, 14. Accordingly, in such configuration, a continuous busbar electrical connection can be achieved inside the base chamber 90 from the power input 12 to the first and second switches 51, 52 and from these switches to the power outputs 13, 14. A reliable and efficient transport of electric power inside the base unit 10 can thus be achieved.

Inside the switching chamber 54, the electrical connections may be provided in any suitable way, for example by means of cables or further busbars.

The power switching device 100, in particular the pressure resistant enclosure 55 and the pressure compensated enclosure 11, are adapted to enable a deployment of the power switching device 100 at water depths of at least 1,000 m, preferably at least 3,000 m. Penetrator plate 60 may thus be configured to withstand differential pressures of at least 100 bar, preferably at least 300 bar. Power switching device 100 may be adapted to supply electric power to a pump, a compressor or other equipment operated at the ocean floor. The power switching device 100 may be adapted to be operated in a voltage range of about 1,000 to about 100,000 V, in particular of about 10,000 to about 80,000 V. It may for example be operated at about 36,000 V or at about 72,000 V.

Base unit 10 further comprises a pressure compensator (not shown). The pressure compensator is in fluid communication with the base chamber 90. The pressure compensator provides pressure balancing between the pressure in base chamber 90 and the pressure prevailing outside the power switching device 100. The pressure compensator may for example comprise a bellows which can contract and expand in accordance with changes of the volume of the medium filling the base chamber 90. Such medium may for example be a liquid or gel, in particular a dielectric liquid. Such pressure compensator is for example disclosed in the document EP 2,610,881 A1.

By providing a single base chamber 90 and continuous busbar connections inside the base chamber 90, a compact and efficient power switching device 100 can be obtained. Furthermore, a significant reduction in weight can be achieved, due to the compact size of the enclosures 11 and 55. Furthermore, the complexity of the power switching device 100 is reduced since only a single base chamber 90 is provided. Compared to devices having separate chambers in separate modules, or having one chamber nested within the other, several advantages can be achieved. These include that only one volume needs to be pressure compensated, whereas with separate chambers, a pressure compensator for each chamber is required. Furthermore, such configurations require more electrical connections, boot seals, inspection hatches and the like. Since all these elements bear a certain risk of failure, the overall reliability of the power switching device 100 can be improved due to the reduced complexity. As an example, by using two chambers each having a pressure compensator, which may be regarded as a weak point, the risk of failure is doubled. In contrast, the risk of failure can be reduced with embodiments of the present invention.

The dashed line in figure 1 illustrates the possibility to continue the input busbar 20 by connecting further base units to the base unit 10, thus extending the power switching device 100. As an example, the enclosure 11 may have an opening at the respective end of the second cylindrical section 16, and a corresponding pressure compensated enclosure can be mounted to this open end. The input busbar 20 can then be continued into the second pressure compensated enclosure, to which a corresponding switching assembly is mounted. The number of switchable power outputs can thus be increased. Note that in such configuration, it is also possible to include a further power input 12 at an additional base unit, so as to feed the power switching device 100 from two sides.

Figure 2 is a schematic drawing showing a perspective view of the power switching device 100 in a particular implementation. The description given above with respect to figure 1 is equally applicable to the embodiment illustrated in figure 2. As can be seen, the pressure compensated enclosure 11 and the pressure resistant enclosure 55 are both mounted to the penetrator plate 60. The first cylindrical section 15 and the second cylindrical section 16 of the pressure compensated enclosure 11 meet in a cross-junction, which is different to the example shown in figure 1. One opening of the second cylindrical section 16 is closed by a closing plate 17 on which the power input 12 is provided. At the second end 18 of the second cylindrical section 16, a further closing plate may be mounted, or as mentioned above, another pressure compensated enclosure of a further base unit can be mounted.

In the example of figure 2, further short cylindrical sections are mounted to the second cylindrical section 16, the openings of which are closed by closing plates in which the first and second power outputs 13, 14 are provided. As visible in figure 2, the power input and power output each comprise three electrical connections for the three phases of electric power.

A first opening of the first cylindrical section 50 is closed by the penetrator plate 60. The opening 19 at the other end can be closed by a further closing plate. By means of this second opening 19, access can be gained to the busbar sections 21, 22 of the input busbars 20 and to respective sections of the output busbars 30, 40. Assembly of the busbar sections is thus facilitated. Instead of mounting a closing plate at this position 19, a pressure compensator may be mounted for providing pressure compensation of the base chamber 90.

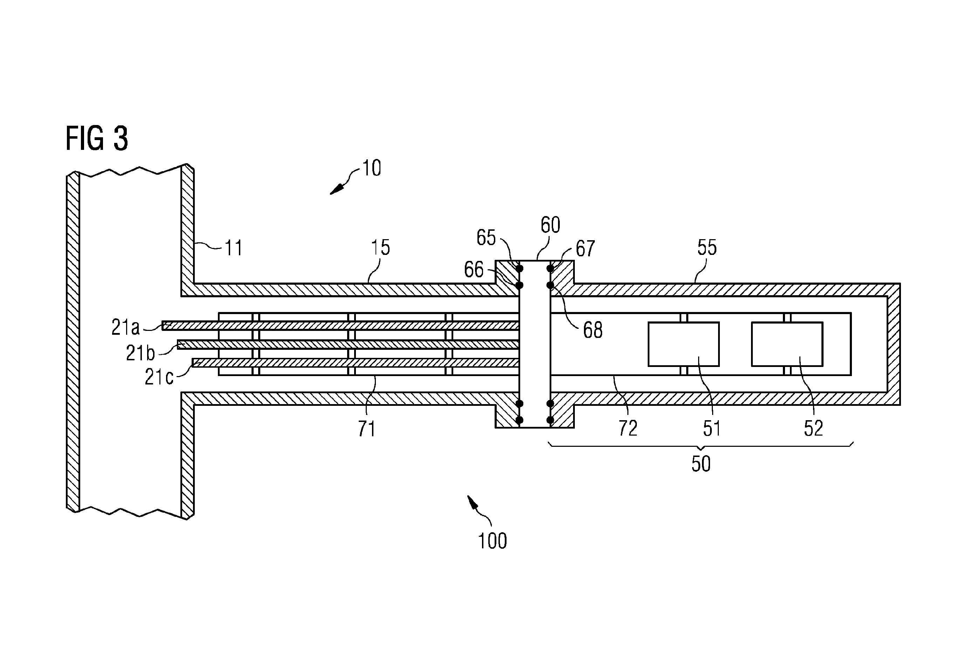

Figure 3 illustrates in detail the three sections 21A, 21B and 21C for the three AC phases of the input busbars 20. A supporting frame 71 is fixedly mounted to the penetrator plate 60. The busbar sections 21A, 21B and 21C are mounted to the supporting frame 71. Supporting frame 71 can be attached to penetrate a plate 60 by welding, but may also be attached by bolting or the like in other configurations. Accordingly, for assembling the power switching device 100, the supporting frame 71 holding the busbar sections 21A, 21B, 21C can be slid into the first cylindrical section 15 of the enclosure 11. Supporting frame 71 may be provided with sliding elements for this purpose, the sliding elements being supported against the inner wall of the first cylindrical section 15. Assembly can thus occur by one assembly action in which the busbar sections are inserted into the cylindrical section 15 while at the same time, the opening in the cylindrical section is closed by the penetrator plate 60.

Furthermore, a second supporting frame 72 can be similarly attached to the penetrator plate 60. The second supporting frame holds in the example of figure 3 the first and second switches 51, 52. Second supporting frame 72 may furthermore support electric conductors, such as cables, providing the electrical connections towards these switches 51, 52. The switching assembly 50 may thus be assembled by simply mounting the pressure resistant enclosure 55 to the penetrator plate 60. By providing a single pressure resistant wall 60 which supports both the busbar sections and the switches, it is possible to preassemble the electrical connections and then simply mount the respective enclosures. Accordingly, assembly of power switching device 100 is significantly facilitated.

As illustrated in figure 3, at least two seals 65, 66 are provided between the pressure compensator enclosure 11 and the penetrator plate 60. Accordingly, a double barrier against the ingress of surrounding seawater can be obtained. Depending on the application, further steals may be provided. In some embodiments, at least three seals are used. Similarly, two or more seals 67, 68 are provided between the pressure resistant enclosure 55 and the penetrator plate 60. Also for this interface, least three seals may be used in embodiments. The seals 65 to 68 may comprise elastomeric seals and/or metal seals. As an example, on each side of the penetrator plate 60, at least two elastomeric, at least one elastomeric and one metal seal, or at least two metal seals may be provided.

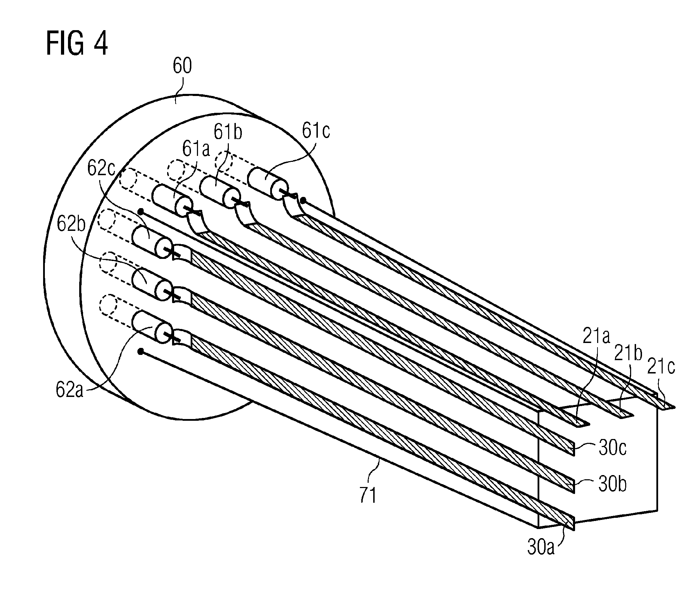

Figure 4 shows a perspective view illustrating details of the frame 71 and the busbars mounted thereto. The sections of different sets of busbars may for example be mounted to different sides of the frame 71. In the example of figure 4, the sections 21A, 21B, 21C of the input busbars 20 are mounted to an upper side of frame 71, while the sections 30A, 30B and 30C of the output busbars 30 are mounted to a side of frame 71. Furthermore, the penetrators 61, 62 for each phase of electric power are illustrated (denoted with references a, b, c). As can be seen, the busbar sections directly connect to the conductors of the penetrators.

Note that in other configurations, frame 71 may by a cylindrical frame, and the busbar sections may in such configuration be distributed around the cylindrical face of the frame.

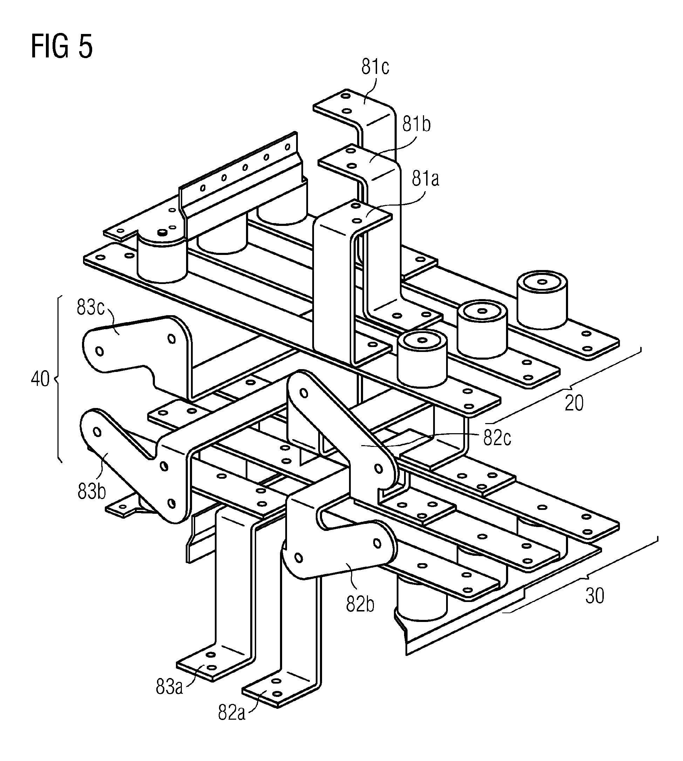

For connecting e.g. the first busbar sections 21 to the second busbar sections 22 in the junction of the cylindrical enclosure sections 15, 16, the assembly illustrated in figure 5 may be used. The bent busbar sections 81a, 81b and 81c may for example be used to connect the busbar sections 21 and 22 of the input busbars 20. Similarly, bent busbar sections 82a, b, c and 83a, b, c are provided for connecting sections of output busbars 30, 40, respectively, which meet in the junction of the first and second cylindrical enclosure sections 15, 16. As mentioned above, mounting of the assembly illustrated in figure 5 may occur via the opening in the first cylindrical section 15 which is illustrated at reference numeral 19 in figure 2.

As can be seen from the above, a power switching device 100 is provided which has a single pressure compensated base chamber, thus reducing complexity and increasing the reliability of the power switching device. Furthermore, continuous busbar connections are provided inside the base chamber. Assembly of such continuous busbar connections is achieved by providing a housing having first and second cylindrical sections and providing access to busbar connections, and by further mounting busbar sections to a frame which is attached to the penetrator plate 60.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A power switching device for operation in an underwater environment, in particular in a deepsea environment, comprising
- a base unit (10) comprising a pressure compensated enclosure (11), wherein the pressure compensated enclosure forms a single base chamber (90) filled with a liquid or gel,
- a switching assembly (50) comprising a pressure resistant enclosure (55) which forms a switching chamber (54) and further comprising at least a first switch (51), in particular a high voltage circuit breaker, disposed in the switching chamber (54),
- a power input (12) mounted to the base unit (10),
- at least a first power output (13) mounted to the base unit (10),
- plural power distribution busbars (20, 30, 40) arranged in the base chamber (90) of the base unit (10), wherein the plural power distribution busbars comprise at least a set of input busbars (20) which form part of an input electrical connection that leads from the power input (12) to the first switch (51) and a first set of output busbars (30) which form part of a first output electrical connection that leads from the first switch (51) to the first power output (13),
- a pressure resistant wall (60) mounted to the base unit (10) and separating the base chamber (90) from the switching chamber (54), and
- penetrators (61, 62, 63) arranged in the pressure resistant wall (60), the penetrators being configured to lead the input electrical connection and the output electrical connection through the pressure resistant wall (60),
wherein the input busbars (20) and/or the output busbars (30) are directly connected to the penetrators (61, 62) in the base chamber (90).

2. The power switching device according to claim 1, further comprising at least a first and a second seal (65, 66) between the pressure resistant wall (60) and the pressure compensated enclosure (11) of the base unit (10), and/or comprising a weld between the pressure resistant wall (60) and the pressure compensated enclosure (11) of the base unit (10).

3. The power switching device according to any of the preceding claims, wherein the power input (12) comprises electrical conductors (25) leading into the base chamber (90), wherein the input busbars (20) are directly connected to said electrical conductors (25).

4. The power switching device according to any of the preceding claims, wherein the input busbars (20) and/or the output busbars (30, 40) run continuously between the power input (12) or the power output (13, 14), respectively, and the penetrators (61, 62, 63) of the pressure resistant wall (60).

5. The power switching device according to any of the preceding claims, wherein the power input (12) is a three phase power input, and wherein the power output (13, 14) is a three phase power output, and wherein each set of busbars (20, 30, 40) comprises at least three busbars.

6. The power switching device according to any of the preceding claims, wherein the switching assembly (50) comprises at least two switches (51, 52), and wherein the power switching device (100) further comprises a second power output (14) mounted to the base unit (10), wherein the plural power distribution busbars arranged in the base chamber (90) comprise a second set of output busbars (40) which form part of a second output electrical connection that leads from the second switch (52) to the second power output (14).

7. The power switching device according to any of the preceding claims, wherein the pressure resistant enclosure (55) of the switching assembly (50) is a cylindrical enclosure which is closed at one end and open at the other end, wherein at the open end, said pressure resistant enclosure (55) is mounted to the pressure resistant wall (60).

8. The power switching device according to any of the preceding claims, further comprising a support frame (71) arranged inside the base chamber (90) and mounted to the pressure resistant wall (60), wherein the input busbars (20) and/or the output busbars (30) comprise busbar sections (21a,b,c; 30a,b,c) supported by said support frame.

9. The power switching device according to any of the preceding claims, further comprising a support frame (72) arranged inside the switching chamber and mounted to the pressure resistant wall (60), wherein at least the first switch (51) is supported by said support frame (72).

10. The power switching device according to any of the preceding claims, wherein the pressure compensated enclosure (11) of the base unit (10) comprises a first cylindrical section (15) having an opening at a first end, the pressure resistant wall (60) being mounted to said first end to close said opening, and a second cylindrical section (16), wherein the first and the second cylindrical sections (15, 16) meet in a cross junction or in a T-junction to form said base chamber (90).

11. The power switching device according to claim 10, wherein said plural power distribution busbars comprise busbar sections (21) extending along the axial direction of the first cylindrical section (15) and busbar sections (22) extending along the axial direction of the second cylindrical section (16).

12. The power switching device according to claim 10 or 11, wherein the first and the second cylindrical sections (15, 16) meet in a cross junction and wherein the first cylindrical section has a further opening (19) at a second end adjacent to said cross junction, said second opening being closed by a closing plate or by a pressure compensator.

13. The power switching device according to any of the preceding claims, wherein the pressure compensated enclosure (11) of the base unit (10) comprises an enclosure section (16) extending along a longitudinal direction, the switching assembly (50) extending perpendicular to the longitudinal direction, wherein the input busbars comprise a first section (21) extending perpendicular to the longitudinal direction towards the switching assembly (50) and a second section (22) extending parallel to the longitudinal direction within the enclosure section (16).

14. The power switching device according to any of the preceding claims, wherein the pressure compensated enclosure (11) of the base unit (10) comprises a cylindrical section (16) extending along a longitudinal direction, the switching assembly (50) extending perpendicular to the longitudinal direction, wherein the power input (12) is mounted to a first end of the cylindrical section (16), and wherein the power output is mounted to the cylindrical wall of the cylindrical section (16).

15. A method of assembling a power switching device (100) for operation in an underwater environment, in particular in a deepsea environment, comprising the steps of
- providing a base unit (10) comprising a pressure compensated enclosure (11), a power input (12) mounted to the base unit, and at least a first power output (13) mounted to the base unit,
- providing a pressure resistant wall (60) comprising penetrators (61, 62, 63) arranged in the pressure resistant wall (60),
- connecting sections (21) of input busbars (20) which form part of an input electrical connection and sections of output busbars (30) which form part of a first output electrical connection to the penetrators (61, 62) of the pressure resistant wall (60),
- mounting the pressure compensated enclosure (11) of the base unit to the pressure resistant wall (60) to form a single base chamber (90) in which the input busbars (20) and the output busbars (30) are arranged,
- mounting a pressure resistant enclosure (55) to the pressure resistant wall (60) so as to form a switching chamber (54), wherein at least a first switch (51) is disposed in the switching chamber (54),
- configuring the input electrical connection such that it leads from the power input (12) to the first switch (51) via the input busbars (20) and the penetrators (61), and
- configuring the output electrical connection such that it leads from the first switch (51) to the first power output (13) via the penetrators (61) and the output busbars (30).
